(19) Europäisches Patentamt
European Patent Office
Office européen des brevets

(11) **EP 2 077 514 A1**

(12) **EUROPEAN PATENT APPLICATION**

(43) Date of publication:
**08.07.2009 Bulletin 2009/28**

(51) Int Cl.:
**G06F 21/00** (2006.01)   **G06K 19/07** (2006.01)

(21) Application number: **07255075.9**

(22) Date of filing: **28.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **British Telecommunications public limited company**
**81 Newgate Street**
**London EC1A 7AJ (GB)**

(72) Inventor: **The designation of the inventor has not yet been filed**

(74) Representative: **Geffen, Nigel Paul et al**
**BT Group Legal**
**Intellectual Property Department**
**PP C5A**
**BT Centre**
**81 Newgate Street**
**London EC1A 7AJ (GB)**

(54) **Radio frequency identification devices and processes therefor**

(57) An RFID device such as an RFID tag (2) and method comprising: storing a current read key and a current take ownership key; and receiving a take ownership command from an RFID reader system (4). Also, sending a new take ownership key to the RFID reader system (4) and replacing the current take ownership key with the new one. Also, replacing, responsive to a change read key command and an indication the RFID reader system (4) holds the new current take ownership key, the current read key with a new current read key enabling reading of the RFID device (2) by an RFID reader system (4) holding the new current read key. Also, generating and encrypting random numbers for authenticating that the RFID reader system (4) holds the relevant take ownership and/or read key. Also, the RFID device (2) responding to being read by an RFID reader system (4) holding the new current read key.

FIG. 4

**Description**

The present invention relates to radio frequency identification (RFID) devices such as RFID tags and processes therefor. The present invention also relates to apparatus and protocols for implementing such processes. The present invention relates in particular, but not exclusively, to RFID tags attached to or otherwise associated with items in a supply chain.

RFID tags are well known. RFID tags are circuits in the form of label-like items that can be read (and sometimes also written on) by reader (and writer) units communicating with the tags at RF frequencies. Further details of RFID tag technology can found in, for example, Landt, Jerry (2001), "Shrouds of Time: The history of RFID", AIM, Inc.

It is known to attach RFID tags, written with batch or unique codes, to items, and to monitor received items.

An example of a proposed standardised approach using RFID technology is known as EPCglobal, further details of which can be found at, for example, www.epcglobalinc.org or from GS1 US, Princeton Pike Corporate Center, 1009 Lenox Drive, Suite 202, New Jersey 08648 Lawrenceville. EPCglobal is incorporated herein by reference.

EPCglobal has proposed an architecture where each tag is given a 96-bit unique code and where each entity in the supply chain can publish information about the product through a so-called EPC information service. An EPC information service is a database that provides a standardized query interface. EPCglobal allows for an EPCglobal tag to respond to a so-called "kill" command. When a secure tag receives a kill command from the RFID reader the tag becomes inoperative. The killing command can be password protected.

An arrangement that allows for delegation of the ability to identify a tag is disclosed in the article "A Scalable, Delegatable Pseudonym Protocol - Enabling Ownership Transfer of RFID Tags", David Molnar, Andrea Soppera and David Wagner, Selected Areas in Cryptography, pages 276-290, August 11-12, 2005, Queen's University, Kingston, Ontario, Canada. The described delegation-enabled scheme associates a tag to an ownership-domain by delegating a time-limited ability for identification.

A starting point for the arrangement described in the preceding paragraph is a tree-based scheme to identify tags based on encryption with shared secrets, which was described in the article "Privacy and Security in Library RFID - Issues, Practices, and Architectures", David Molnar and David Wagner, Proceedings of the 11th ACM Conference on Computer and Communications Security, October 25-29, 2004, Washington DC, USA.

The present inventors have realised, that despite the advantages offered by the arrangement described in the above mentioned article by Molnar, Soppera and Wagner, two drawbacks are that the tag has to incorporate a counter, which effectively means maintaining a state and allowing for denial-of-service attacks, and, due to a relative lack of precision, a new owner needs to be able to manipulate the counter, if the old owner still owns valid secrets. The present inventors have realised it would be desirable to provide a new RFID tag ownership scheme and RFID tag form to alleviate these disadvantages and to provide further benefits arising from such a scheme and tag. The present inventors have also realised it would be desirable to provide new RFID reader properties and authorisation processes and systems particularly suited to such a scheme and that allow further advantages to be derived.

In a first aspect the present invention provides an RFID device, comprising: a current read key for enabling the RFID device to be read by an RFID reader system holding the current read key; a current take ownership key; and means for receiving a take ownership command from the RFID reader system.

The RFID device may further comprise: means for generating, responsive to receiving the take ownership command, a new take ownership key; and means for sending the new take ownership key to the RFID reader system.

The RFID device may further comprise: means for receiving acknowledgement of the RFID reader system receiving the new take ownership key; and means for deleting, responsive to receiving the acknowledgement of the RFID reader system receiving the new take ownership key, the current take ownership key and treating the new take ownership key as a new current take ownership key.

The RFID device may further comprise: means for receiving, from the RFID reader system, a change read key command and an indication that the RFID reader system holds the new current take ownership key; and means for replacing, responsive to receiving the change read key command and the indication that the RFID reader system holds the new current take ownership key, the current read key with a new current read key enabling the RFID device to be read by an RFID reader system holding the new current read key.

The RFID device may further comprise: means for generating random numbers; means for encrypting the random numbers with the relevant take ownership and/or read key; means for sending the encrypted random number to the RFID reader system; means for receiving the random numbers in responses from the RFID reader system; and means for checking the received random numbers to authenticate that the RFID reader system holds the relevant take ownership key and/or read key.

The RFID device may further comprise one or more identification keys for use by an authorisation apparatus for identifying the RFID device.

In a further aspect, the present invention provides a method for an RFID device, the method comprising: storing a current read key enabling the RFID device to be read by an RFID reader system holding the current read key; storing a current take ownership key; and receiving a take ownership command from the RFID reader system.

The method may further comprise: generating, responsive to receiving the take ownership command, a new take ownership key; and sending the new take ownership key to the RFID reader system.

The method may further comprise: receiving acknowledgement of the RFID reader system receiving the new take ownership key; and deleting, responsive to receiving the acknowledgement of the RFID reader system receiving the new take ownership key, the current take ownership key and treating the new take ownership key as a new current take ownership key.

The method may further comprise: receiving, from the RFID reader system, a change read key command and an indication that the RFID reader system holds the new current take ownership key; and replacing, responsive to receiving the change read key command and the indication that the RFID reader system holds the new current take ownership key, the current read key with a new current read key enabling the RFID device to be read by an RFID reader system holding the new current read key.

The method may further comprise: generating random numbers; encrypting the random numbers with the relevant take ownership and/or read key; sending the encrypted random number to the RFID reader system; receiving the random numbers in responses from the RFID reader system; and checking the received random numbers to authenticate that the RFID reader system holds the relevant take ownership key and/or read key.

The method may further comprise sending the identity of the RFID device encrypted by one or more identification keys to the RFID reader system for use by an authorisation apparatus for identifying the RFID device.

The method may further comprise the RFID device successfully responding to being read by an RFID reader system holding the new current read key.

In a further aspect the present invention provides the following method, and an RFID device adapted to perform the following method: storing a current read key and a current take ownership key; and receiving a take ownership command from an RFID reader system. The method may further comprise: sending a new take ownership key to the RFID reader system and replacing the current take ownership key with the new take ownership key. The method may further comprise: replacing, responsive to a change read key command and an indication that the RFID reader system holds the new current take ownership key, the current read key with a new current read key enabling reading of the RFID device by an RFID reader system holding the new current read key. The method may further comprise: generating and encrypting random numbers for authenticating that the RFID reader system holds the relevant take ownership key and/or read key. The method may further comprise: the RFID device successfully responding to being read by an RFID reader system holding the new current read key.

In the following section, the term "RFID tag", will generally be used, the word "tag" indicating that the RFID device may be suitable for "tagging" one or more items. It will be understood that "tags" may be any of a variety of sizes and shapes.

Embodiments of the invention will now be described, by way of example only, with reference to the accompanying drawings, in which:

Figure 1 shows a schematic overview of a system in which an embodiment of the invention may be implemented;
Figure 2 is a combined message sequence chart and process flowchart showing certain messages sent, and certain process steps carried out, during one example of a process of implementation of a read command;
Figure 3 is a combined message sequence chart and process flowchart showing certain messages sent, and certain process steps carried out, during one example of a process of implementation of a communication protocol for plain tag identification;
Figure 4 is a combined message sequence chart and process flowchart showing certain messages sent, and certain process steps carried out, during one example of a process of implementation of a communication protocol for Take Ownership;
Figure 5 is a combined message sequence chart and process flowchart showing certain messages sent, and certain process steps carried out, during one example of a process of changing a read key;
Figure 6 shows a simplified example of a tree of secrets;
Figure 7 is a process flowchart showing certain process steps carried out in one example of an inventorying process;
Figure 8 is a process flowchart showing certain process steps carried out in one example of a take ownership process; and
Figure 9 is a process flowchart showing certain process steps carried out in one example of a change read key process.

An embodiment of an RFID tag adapted to perform different modes of operation such that effective "ownership" of the tag can be taken over by a new permitted party will now be described. Also an embodiment of a process for the RFID tag will be described. Also, a protocol employed by the adapted RFID tag will be described. Also, an adapted RFID reader and reading process and authorisation processes and systems that can be used in conjunction with the adapted RFID tag and protocol will be described.

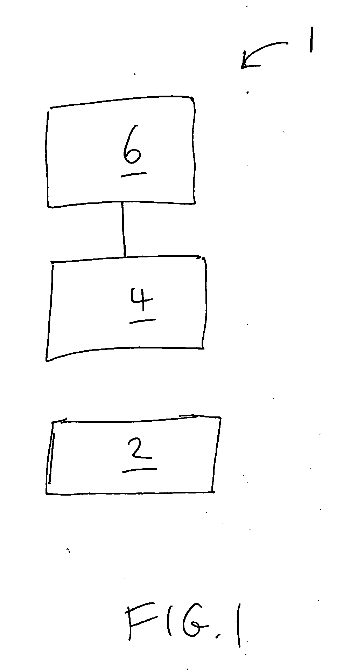

Figure 1 shows a schematic overview of a system 1 in which the embodiment may be implemented. The system 1 comprises an RFID tag 2, hereafter referred to as the tag 2, an RFID reader system 4, and a trusted centre 6. The RFID reader system 4 is arranged to perform read-out of the tag 2. The trusted centre is coupled to the RFID reader system 4. The trusted centre 6, which may also be referred to as a trusted third party or a route authority, is an entity with responsibility for various authorisation, authentication and information supplying operations in relation to issued RFID tags including the tag 2. Thus the trusted centre 6 is one example of an authorising entity, comprising authorisation apparatus 6 that performs the process steps ascribed below to the trusted centre.

In this embodiment, the RFID reader system 4 comprises a conventional RFID reader coupled to a separate processing module for performing the processes described below. Furthermore, in this embodiment, the RFID reader and the separate processing module are collocated, i.e. both at the same premises of an entity requiring to process the received RFID tag 2. However, in other embodiments, the RFID reader system 4 may be implemented in other ways. One possibility is that a single integrated apparatus may be provided performing all the functionality of the RFID reader system 4. Another possibility is that the RFID reader system 4 may comprise a conventional RFID reader coupled to a plurality of separate processing modules for performing the processes described below. Another possibility is that the RFID reader system 4 may comprise a conventional RFID reader coupled to a plurality of separate processing modules for performing the processes described below, with one or more of the separate processing modules being provided as a distributed system, i.e. physically located remote from the RFID reader, e.g. at different premises to that where the RFID reader is located.

In this embodiment, except where stated otherwise below, the invitation tag operates according to the EPCGen2 standard. The EPCGen2 protocol (full name Class 1 Generation 2 UHF Air Interface Protocol Standard) is published by EPCglobal, and is incorporated herein by reference.

In relation to the RFID reader system 4, the tag 2 has two different behavioural modes, the data relevant to the behavioural mode relevant at a given time being the data which is output to the RFID reader system 4 by the tag 2 on being read. The two modes are:

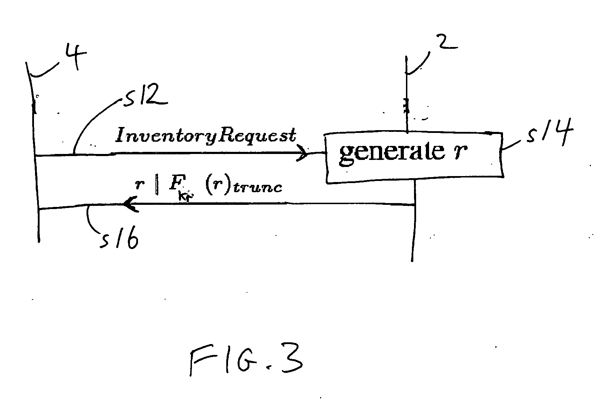

1) An identification mode: for identification, the tag 2 behaves according to the standardized inventorying procedure (according to the relevant ISO 18000 substandard, e.g. ISO 18000-3 Mode 1/ISO 15693 or ISO 18000-6 Mode C/EPC Class 1 Gen 2), simply replacing the ID or EPC with a pseudonym of the same length. Every RFID reader system that has the current read key is able to identify the tag, but nothing else. Further details of this will be described later below with reference to Figure 3.

2) An ownership mode: the RFID reader system can request a 'take-ownership' string from the tag, which includes:

- identification information that is used by the trusted centre 6 to identify the tag 2.
- a "take ownership key" that can only be decrypted by the trusted centre 6.
- Some encrypted acknowledgement information, e.g. a nonce.

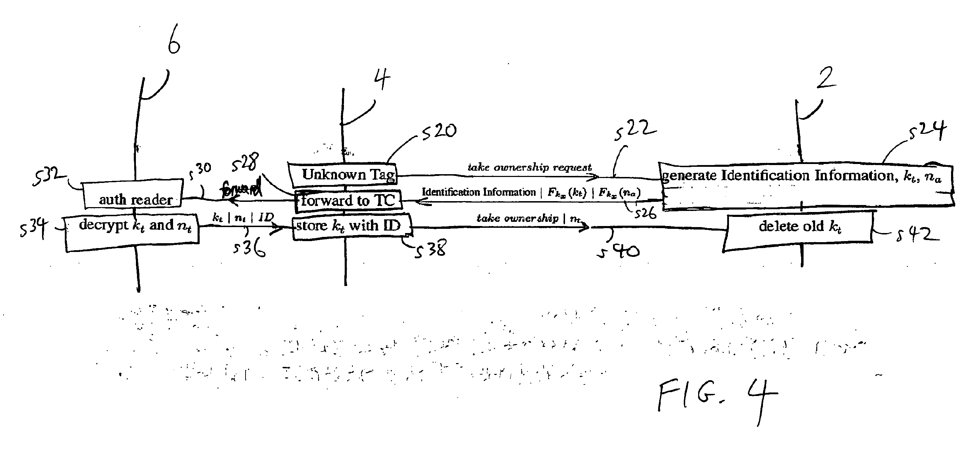

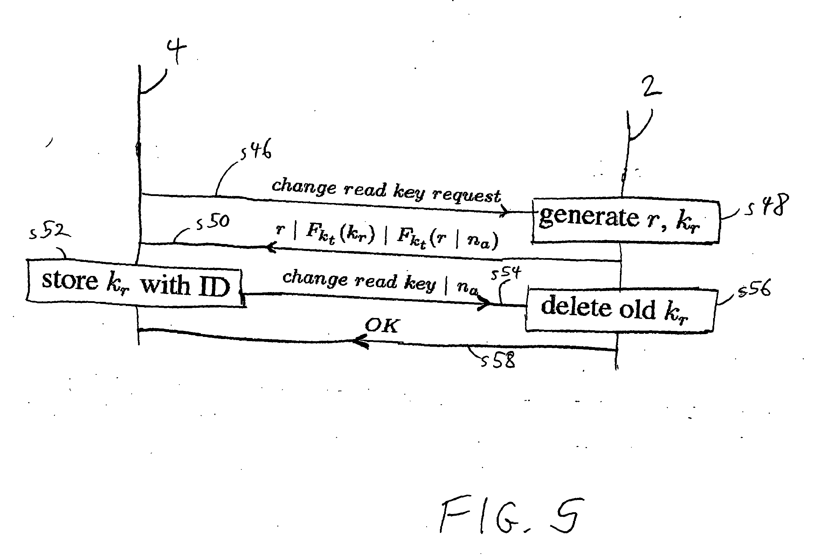

If the RFUD tag reader 4 is allowed to take ownership, it receives the ID or EPC, the "take ownership key", and acknowledgement information from the trusted centre 6, as described in further detail later below with reference to Figure 4. The take ownership key can then be used to interact with the tag 2, changing a read key which the tag 2 uses to generate the pseudonym for identification, the protocol of which is described later below with reference to Figure 5.

If the RFID reader system 4 confirms to the tag 2 that it has received the new take ownership key, using the acknowledgement information, the old key is deleted. Hence, previous owners are not able to change the read key or indeed query the tag 2 anymore, since the read key has been changed by the new owner. This means that the read key can safely be passed on to every entity that is allowed to read the tag 2 for a certain amount of time. If the RFID reader system 4 is not allowed to take ownership, it can still be given the tag ID or EPC by the trusted centre 6.

To produce the identification information for the trusted centre 6, any suitable conventional protocol can be used. The choice may be made according to the load of the system and the demands on the trusted centre 6. For example: in small, closed systems, another pseudonym similar to the one used for identification, which is a random number encrypted with a unique symmetric key, can be used. However, in large systems with high load on the trusted centre 6, one preferred protocol is to use the tree based approach described in the article "Privacy and Security in Library RFID - Issues, Practices, and Architectures", David Molnar and David Wagner, Proceedings of the 11th ACM Conference on Computer and Communications Security, October 25-29, 2004, Washington DC, USA, which is incorporated herein by reference. Another possibility is to use a hash chain based approach described in the article "A scalable protocol for RFID pseudonyms", G. Avoine and P. Oechslin,.IEEE PerSec, Orlando, USA, March 14, 2004, which is incorporated herein by reference.

The following aspects are provided:

1) Two different modes of the tag 2 towards the RFID reader system 4, i.e. separation of the aspects of identification and interaction.

2) A possibility to take ownership of the tag 2 and prevent previous owners from changing the read key afterwards.

3) More precise means to delegate the ability for identification through the read key e.g. if a party, which received a read key, is no longer allowed to read the tag, the read key can be changed at any time by the owner.

This tends to provide the following advantages:

1) Identification can be fitted easily into existing standards, for example ISO standards.

2) There is no communication overhead for identification

3) The approach is flexible in terms of the identification protocol used at the trusted centre 6.

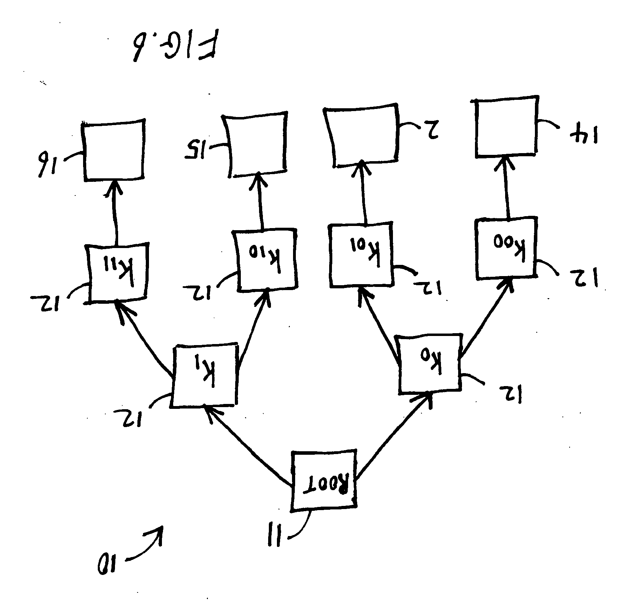

In more detail, in this example the "Tree of Secrets" described in the above mentioned article by Molnar and Wagner, and incorporated herein by reference, is used as the identification protocol. This will be described in more detail later below with reference to Figure 6.

In the following description the following notation will be used:

$x \in \{0,1\}^n$      Bitstring x of length n

$c = a \mid b$      Concatenation of bitstring a of length n with bitstring b of length m, yielding a bitstring c with length n + m

$x_{trunc,m}$      Bitstring x is truncated to a length of m bits.

$F_k(x)$: n x n      Function to encrypt the bitstring x of length n with key k, obtaining another bitstring of the same length n.

$len(x)$      Length of bitstring x in bits.

In the following description the following symbols will be used:

r      Random number

$k_r$      Read Key

$k_t$      Take Ownership Key

$k_i$      Key i from the Tree of Secrets

d      Depth of the Tree of Secrets

b      Branching factor of the Tree of Secrets

m      Length of a plaintext/ciphertext block

p      Pseudonym

$n_a$      Nonce to acknowledge use of a new key $k_t$ or $k_r$.

The Identification Protocol is the Tree of Secrets

Trusted centre 6: The tree of secrets is organised as shown in Figure 6.

Tag 2:      The keys are stored in array keys of length d in the order they appear in the tree of secrets, going from the root to the leaf associated with a certain tag.

For example for tag 2 which is highlighted by way of example in figure 5: d=2

keys[0] = $k_0$ on the tag = $k_0$ in the tree of secrets

keys[1] = $k_1$ on the tag = $k_{01}$ in the tree of secrets

The new operating protocol includes three different kinds of interaction, which may be termed:

i) Identification.

ii) Take Ownership.

iii) Change Read Key.

These will now be described in more detail.

**i) Identification.**

This corresponds to the standard compliant inventory procedure. The tag 2 uses a short random number r and a read key $k_r$, shared only between the tag 2 and the RFID reader system 4, to produce a pseudonym p with the same length as the ISO18000 tag identifier, for example the ISO18000 part 3 mode 1 ID or the ISO18000 part 6 mode C EPC. Encryption is performed using a standard cryptographic primitive, such as the Advanced Encryption Standard (AES) block cipher, AES is a Federal Information Processing Standards Publication (FIPS PUBS) issued by the National Institute of Standards and Technology (NIST) of the USA, and this standard is incorporated herein by reference.

The pseudonym is generated by the tag 2 as follows:

$n = \text{len(tag identifier)}$
$m = \text{len(plaintext block)}$
Generate $r \in \{0,1\}^{n/2}$ and pad it with a known *padding* to obtain *plaintext* $\in \{0,1\}^m$ *ciphertext* $\in \{0,1\}^m = F_{kr}(\text{plaintext})$
$p = r \mid \text{ciphertext}_{\text{trunc},n/2}$

For example, a 64 bit pseudonym, encrypted with the 128 bit version of the AES cipher can be produced as follows (hexadecimal notation):

$n = \text{len(ID)} = 64 \text{ bit}$
$m = \text{len(AES block)} = 128 \text{ bit}$
Generate $r \in \{0,1\}^{32}$ and pad it with 96 zero bits to obtain *plaintext* $\in \{0, 1\}^{128}$ *ciphertext* $\in \{0,1\}^{128} = AES_{kr}(\text{plaintext})$
$\cdot p = r \mid \text{ciphertext}_{\text{trunk},32}$

p is then sent to the reader as response to the inventory request, as shown in Figure 3 which will be described in more detail later below. The reader performs a linear search through its key space to find the key that yields ciphertexttrunk,n/2 upon encryption of r + padding:

```
for(index = 1; index <= number_of_stored_keys; index++)
n = len(tag_ID)
key = key_storage[index]
c = encrypt using key(substring of p(0 to n/2) + padding)
if(substring of c(0 to n/2) == substring of p(n/2 to n)
ID = ID_storage[key]
return key and ID
```

Since every key is unique, keys are used to identify the tag 2 by storing the ID together with the key. The number of tags in the local environment, for which read keys are available, should be reasonably small, so a linear search should be feasible. Another possibility is that in other embodiments it can be further reduced through delegating read keys, as described below.

## ii) Take Ownership.

On first contact with a certain tag, e.g. tag 2, the RFID reader system 4 will not be able to decode the pseudonym sent out by the tag 2 and therefore the RFID reader system 4 will also be unable to identify the tag. This is because the tag has not been in the same domain of ownership and the read key is unknown. To change the domain of ownership, the RFID reader system queries the tag with a special command, called "Take Ownership" Command. This command may also be issued at any time later, even if the tag already is in the right domain of ownership. In this embodiment the Take Ownership command is implemented using the custom command space provided in ISO18000 series standards. The response is a bitstring based on the static tree of secrets described above. It is extended by the following two pieces of information:

1. A new secret denoted take ownership key $k_t$ that is generated randomly by the tag 2.
2. A nonce $n_a$ that will be used later in the procedure to acknowledge the reception of the new key to the tag 2.

The response is generated by the tag 2 using the following procedure:

$d = \text{depth of the tree of secrets} = \text{number of keys stored on the tag}$
$m = \text{len(plaintext block)}$
Generate $r \in \{0,1\}^m$, $k_t \in \{0,1\}^m$, $n_a \in \{0,1\}^m$
for($i = 1;\ i <= d;\ i++$)

$k_i = keys[i]$
$\text{ciphertext}_{id} \mid = F_{ki}(r)$ // concatenate encryption result for each key

$$ciphertext_{kt} = F_{ki}(k_t)$$
$$ciphertext_{na} = F_{ki}(n_a)$$
$$response = r \,|\, ciphertext_{id} \,|\, ciphertext_{kt} \,|\, ciphertext_{na}$$

r, $k_t$ and $n_a$ are all generated uniformly by the tag 2, using a random number generator. The for-loop corresponds to the static tree of secrets of the above described tree of secrets scheme and serves for identification only, which is indicated by the subscript for the resulting ciphertext. Any key $k_i$ out of the tree of secrets can be used to encrypt $k_t$ and $n_a$, as long as they are made inaccessible for the reader.

As shown in Figure 4, where "Identification Information" corresponds to the tree of secrets in this case, the response comprises the following information:

1) The random number r.
2) The concatenated results of encrypting this random number with every key from the tree of secrets subsequently, $F_{k1}(r) \,|\, F_{k2}(r) \,|...| F_{kd}(r)$
3) The encrypted take ownership key $k_t$, $F_{ki}(k_t)$
4) The encrypted acknowledgement nonce $n_a$, $F_{ki}(n_a)$

Hence, the length of the response is len(r) + len(d * m) + len(m) + len(m).

This response is passed directly to the trusted centre 6, since it is not of any use to the RFID reader system 4. The trusted centre 6 identifies the tag 2 by performing, in this example, a depth first search (in this example, the algorithm shown immediately below in Java-like syntax, ciph_id corresponding to ciphertextid):

```
Node.searchKey(String r, String[] ciph_id, int layer, int d)
{
  int m = ciphertext_block_length;
  Node[] children = this.getChildren();
  for(Node child : children) // for each child node
  {
    current_key = child.getKey();
    ciphertext = encrypt using current_key(r);
    if (ciphertext == ciph_id[layer])
    {
      if(layer == d)
      {
        return this.getID();
      }
      else
      {
        ID = child.searchKey(r, ciph_id, layer+1, d);
        return ID;
      }
    }
  }
}
```

After identification, the trusted centre 6 looks up the security and privacy policy of this tag. According to policy of this example, three choices exist:

1) The RFID reader system 4 is not included in the list of readers allowed to read this tag 2, the request is rejected.
2) The RFID reader system 4 is allowed to read this tag 2 only, the trusted centre 6 returns the tag identifier only.
3) The RFID reader system 4 is allowed to take ownership of the tag 2. In this case, the trusted centre 6 uses $k_i$, that was specified during system setup, to decrypt $k_t$ and $n_a$. Afterwards, it returns the tag identifier, the take ownership key $k_t$ and the acknowledgement nonce $n_a$ to the RFID reader system 4.

After reception of the new secret, the RFID reader system 4 sends $n_a$ back to the tag 2 to acknowledge. The tag 2 deletes the old key $k_t$, if any, and acknowledges itself by returning an ISO18000 compliant "OK".

The RFID reader system 4 is still not able to perform normal tag authentication as it has not yet changed the read key. Hence the RFID reader system 4 thereafter issues a change read key command, which is described in more detail in part iii) below.

In further embodiments, the length of the tag response may be reduced, with resultant reduction in the time taken to transmit the tag response. There are various ways this can be done, for example:

1) Use of a short random number - the random number does not have to be the same length as a plaintext block, but can be much shorter, since it is used only once for identification. The length can be chosen depending on the quality of the random number generator and the number of tags in the whole system. The remaining number of bits up to the length of the plaintext block is then padded with a known padding for encryption, such as described in part i). This would reduce the overall length to $len(r') + (d * m) + m + m$, where r' is a random number of $len(r') < m$.

2) Use of truncation - as described in the above mentioned article by Molnar, Soppera and Wagner, depending on the branching factor of the tree, it is possible to truncate a large amount of each of the encryption results for the tree of secrets. This is possible, because the right key is searched through encrypting the known plaintext and comparing the result instead of trying to decrypt the ciphertext. For example in a binary tree, the ciphertext may be truncated down to 1 bit for each layer, without leading to many false positives, assuming a uniform distribution of key values within the tree. However, the encryption result for the lowest layer of the tree should not be truncated to ensure a unique identification of the tag. Given a length $n < m$ for a truncated ciphertext string, this reduces the overall length of the response so $len(r) + (d-1 * n) + m + m + m$. However, truncation is not possible for $k_t$ and $n_a$, because the plaintext is unknown.

3) Use of short random number and short acknowledgement nonce - by also reducing the length of both, the random number r and the acknowledgement nonce $n_a$, they can be combined within the last stage of the tree of secrets if $len(r') + len(na) <= m$. The total length of the response would then be $len(r') + (d * m) + m$.

4) Use of a combination of points 1-3 - using a short random number, including $n_a$ with the last stage of the tree of secrets, and truncating all other stages, the communication overhead can be greatly reduced to $len(r') + (d-1 * n) + m + m$.

### iii) Change Read Key.

This command may be issued by every party, entity or instance that "owns" the tag 2, that is, holds the take ownership key. As a response to this command, the tag 2 generates a new read key $k_r$ and an acknowledge nonce $n_a$ and protects them using the take ownership key $k_t$.

$n = len(\text{tag identifier})$
$m = len(\text{plaintext block})$
Generate $r \in \{0,1\}^m$, $k_r \in \{0,1\}^m$, $n_a \in \{0,1\}^m$
$ciphertext = F_{kt}(r) \mid F_{kt}(k_r) \mid F_{kt}(n_a)$
$response = r \mid ciphertext$

The length of the response is $len(r) + m + m$.
In this communication, the random number serves only for prevention of replay attacks.
If an RFID reader system, for example RFID reader system 4 "owns" the tag, for example tag 2, the RFID reader system 4 is able to decode this information, store the read key and acknowledge its use. The read key can then be distributed by the owner to all readers that are supposed to be able to read the tag 2.

In further embodiments, a short random number and short acknowledgement nonce may be used - as with the take ownership command, the communication overhead can be reduced by using a random number r' and an acknowledgement nonce $n_a$ such that $len(r') + len(n_a) <= m$, yielding a response length of $len(r') + m$.

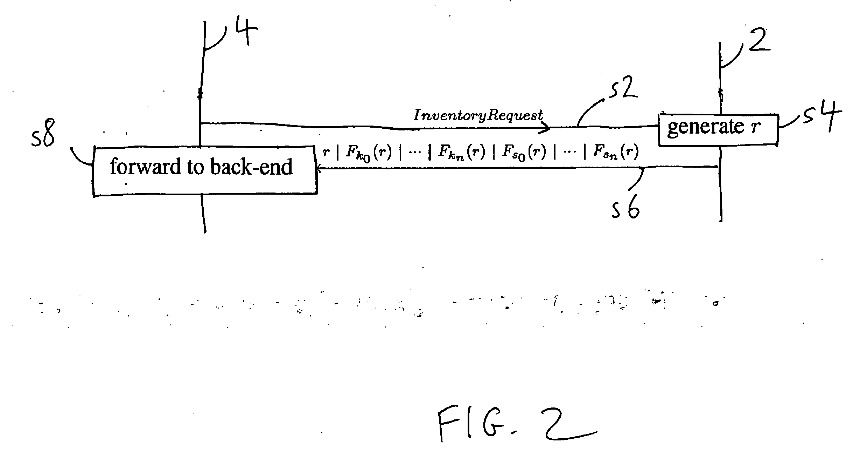

Figure 2 is a combined message sequence chart and process flowchart showing certain messages sent between the RFID reader system 4 and the tag 2, and certain process steps carried out by these elements, during one example of a process of implementation of a read command that can be used with the above described embodiment. In this example, the process of implementation of the read command is according to the above mentioned article by Molnar and Wagner.

At step s2, the RFID reader system 4 sends an Inventory Request to the tag 2. At step s4, the tag 2 generates "r", a random nonce. At step s6, the tag 2 sends a concatenation function output to the RFID reader system 4. The concatenation function is:

$$r \mid F_{k0}(r) \mid \cdots \mid F_{kn}(r) \mid F_{s0}(r) \mid \cdots \mid F_{sn}(r)$$

At step s8, the RFID reader system 4 forwards the concatenation function output to its back-end.

Figure 3 is a combined message sequence chart and process flowchart showing certain messages sent between the RFID reader system 4 and the tag 2, and certain process steps carried out by these elements, during one example of a process of implementation of a communication protocol for plain tag identification that can be used with the above described embodiment. This is in effect a read command, i.e. the RFID reader system 4 reading the tag 2 using the read key.

At step s12, the RFID reader system 4 sends an Inventory Request to the tag 2. At step s14, the tag 2 generates "r", a random nonce. At step s16, the tag 2 sends a concatenation function output to the RFID reader system 4. The concatenation function is:

$$r \mid F_{kr} (r)_{trunc}$$

In this concatenation function, the plain text r is concatenated with $F_{kr}$, $F_{kr}$ being the encryption function using the read key. Furthermore, the encryption function is truncated.

Figure 3 shows the pseudonym generated by the tag is produced by encryption with the read key $k_r$ for local decryption by a reader back-end possessing $k_r$. In Figure 2, the pseudonym is produced using the Molnar and Wagner scheme for decryption by the Trusted Centre 6 using a series of keys $k_i$ arranged in a hierarchy. This scheme is more scalable in terms of tag identification and hence more suited to the Trusted Centre 6 which will have knowledge of more keys that a single reader back-end system. In other examples the Trusted Centre 6 may also use a single Trusted Centre read key $k_{tc}$. In another example the read key $k_r$ used by the reader back-end may be implemented as a series of read keys $k_n$ using the Molnar and Wagner scheme.

Figure 4 is a combined message sequence chart and process flowchart showing certain messages sent between the trusted centre 6, the RFID reader system 4 and the tag 2, and certain process steps carried out by these elements, during one example of a process of implementation of a communication protocol for Take Ownership that can be used with the above described embodiment. In this example, the communication protocol for take Ownership is for where "Identification Information" denotes an arbitrary identification protocol, such as the tree-based protocol described in the above mentioned Molnar and Wagner article.

At step s20, the reader determines it is attempting to read an unknown tag. Therefore, at step s22, the RFID reader system 4 sends a take ownership request to the tag 2. At step s24, the tag 2 generates a challenge comprising the above mentioned Identification Information, a take ownership key $k_t$, and a nonce $n_a$. At step s26, the tag 2 sends a concatenation function output to the RFID reader system 4. The concatenation function is:

$$\text{Identification Information} \mid F_{kx} (k_t) \mid F_{kx} (n_a)$$

At step s28, the RFID reader system 4 determines to forward this concatenation function output to the trusted centre 6. Consequently, at step s30, the RFID reader system 4 forwards this concatenation function output to the trusted centre 6. At step s32, the trusted centre 6 authenticates the RFID reader system 4. If authentication is successful, then at step s34, the trusted centre 6 decrypts the take ownership key $k_t$ and the nonce, which may now conveniently be called $n_t$. Indeed, it will be appreciated that in the present description and figures, the term $n_a$ is synonymous with the term $n_t$ when the referred to nonce is generated for or used during changing of the take ownership key, whereas the term $n_a$ is synonymous with the term $n_r$ when the referred to nonce is generated for or used during changing of the read key. At step s36, the trusted centre 6 sends a concatenation function output to the RFID reader system 4. The concatenation function is:

$$k_t \mid n_t \mid ID$$

At step s38, the RFID reader system 4 stores the decrypted take ownership key $k_t$ with ID, where ID is an identifier that can be meaningfully associated with other tag or object information, such as an Electronic Product Code. At step s40, the RFID reader system 4 sends a concatenation function output to the tag 2. The concatenation function is:

## take ownership | $n_t$

At step s40, the tag 2 deletes the old take ownership key $k_t$. Hence, at the end of the process steps shown in Figure 4, the ownership of the tag 2 has been taken such that the tag 2 can be controlled. The tag 2 is then controlled by changing the read key, as will be described in more detail with reference to Figure 5 below. The tag 2 is then controlled by the new owner in the sense that other parties, including any previous owner, are excluded as they will not have the new read key for the tag 2.

Figure 5 is a combined message sequence chart and process flowchart showing certain messages sent between the RFID reader system 4 and the tag 2, and certain process steps carried out by these elements, during one example of a process of changing the read key that can be used with the above described embodiment. $k_t$ denotes the take ownership key, $k_r$ the new read key, and $n_a$ is a nonce for acknowledgement. At step s46, the RFID reader system 4 sends a change read key request to the tag 2. At step s48, the tag 2 generates "r", a random nonce, and the new read key $k_r$. At step s50, the tag 2 sends a concatenation function output to the RFID reader system 4. The concatenation function is:

$$r \mid F_{kt}(k_r) \mid F_{kt}(r \mid n_a)$$

At step s52, the RFID reader system 4 the decrypted take ownership key $k_t$ with ID, where ID is an identifier that can be meaningfully associated with other tag or object information, such as an Electronic Product Code. At step s54, the RFID reader system 4 sends a concatenated function output to the tag 2. The concatenation function is:

## change read key | $n_a$

In the concatenation function, "change read key" is a command. At step s56, the tag 2 deletes the old read key. At step s58, the tag 2 sends an OK confirmation to the RFID reader system 4.

Figure 6 shows a simplified example of a tree of secrets used in this example. The tree of secrets 10 comprises a plurality of nodes, in particular a root 11 and a plurality of leaves 12. Each leaf 12 corresponds to a key. The leaves 12 are in hierarchical layers, e.g. in this example there is a first hierarchical layer with keys $k_0$ and $k_1$, and a second hierarchical layer with keys $k_{00}$, $k_{01}$, $k_{10}$ and $k_{11}$. Each leaf 12 in the second hierarchical layer, which in this simplified example is the final layer, is connected to a respective tag. In this example, the leaf with key $k_{00}$ is connected to tag 14, the leaf with key $k_{01}$ is connected to tag 2, the leaf with key $k_{10}$ is connected to tag 15, and the leaf with key $k_{11}$ is connected to tag 16. A given tag stores all the keys that are on its unique leaf path from the root 11 to the leaf that connects to that tag. For example, tag 2 stores keys $k_0$ and $k_{01}$.

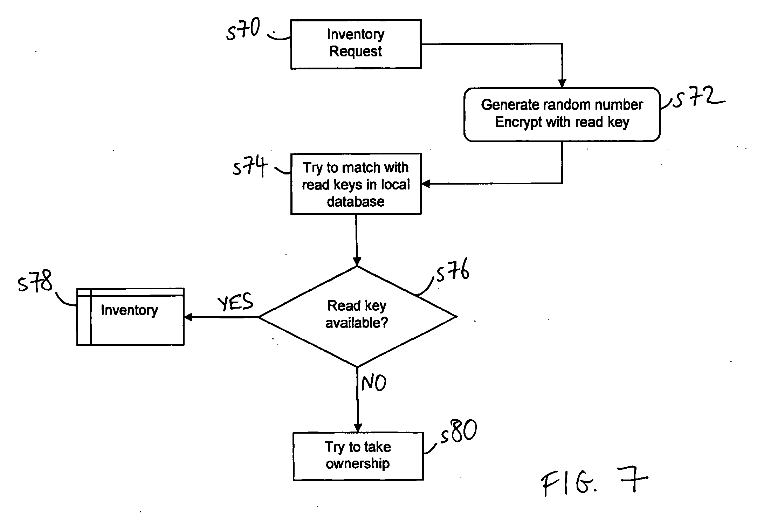

Figure 7 is a process flowchart showing certain process steps carried out in one example of an inventorying process that can be used with the above described take ownership protocols.

At step s70, the RFID reader system 4 raises an inventory request and sends the inventory request to the tag 2. At step s72, the tag 2 generates a random number, encrypts the random number with a read key, and sends the encrypted number to the RFID reader system 4. At step s74, the RFID reader system 4 attempts to find a matching key in its local database. At step s76 the RFID reader system 4 determines whether such a read key is available. If the outcome of the determination at step s76 is positive, i.e. the read key is available, then the process moves to step s78, where the RFID reader system 4 decrypts the identifier and outputs the decrypted inventory information. However, if the outcome of the determination at step s76 is negative, i.e. the read key is not available, then the process moves to step s80, where the RFID reader system 14 attempts to take ownership of the tag 2.

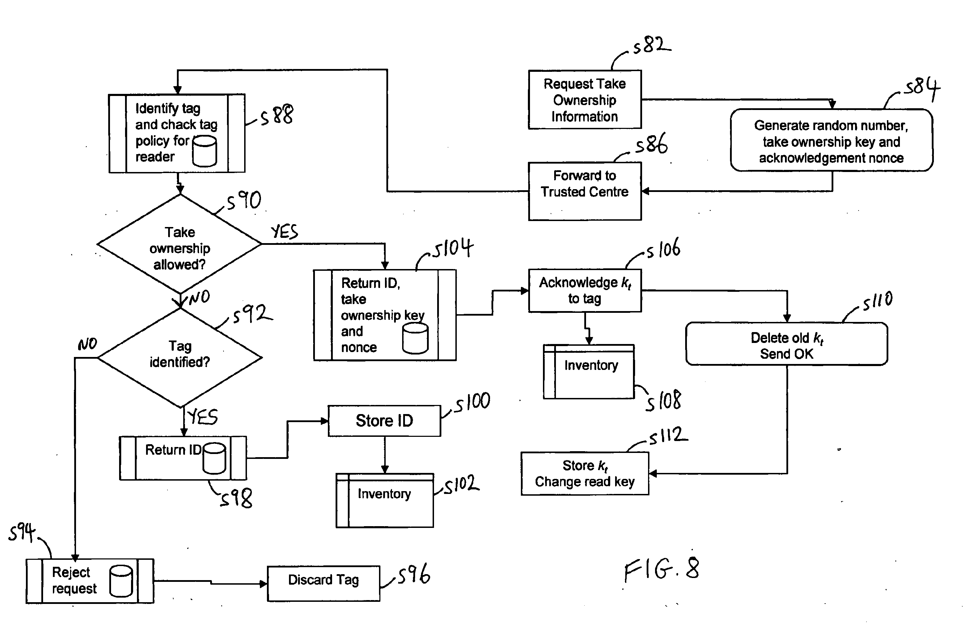

Figure 8 is a process flowchart showing certain process steps carried out in one example of a take ownership process that can be used with the above described take ownership protocols and/or for implementing the attempting to take ownership step s80 of the process described with reference to Figure 7. In the process of Figure 8, the trusted centre 6 decides which information to send to the RFID reader system 4.

At step s82, the RFID reader system 4 requests take ownership information from the tag 2. At step s84, the tag 2 generates a random number, a take ownership key, and an acknowledgement nonce, and sends these items to the RFID reader system 4. At step s86, the RFID reader system 4 forwards the random number, the take ownership key, and the acknowledgement nonce to the trusted centre 6. At step s88, the trusted centre 6 identifies the tag 2 and checks a stored tag policy for the given RFID reader system 4. At step s90, the trusted centre determines whether "take ownership" is allowed. If the outcome of the determining step s90 is negative, i.e. "take ownership" is not allowed, then the process moves to step s92, where the trusted centre determines whether the tag has nevertheless been successfully identified. If the outcome of the determining step s92 is negative, i.e. if the tag 2 has not been identified, then the process moves to step s94, where the trusted centre 6 rejects the take ownership request, and informs the RFID reader system 4 of this outcome. Consequently, at step s96, the RFID reader system 4 effectively discards the tag 2. If, however, the outcome of the determining step s92 is positive, i.e. if the tag 2 has been identified, then the process moves to step s98, where the trusted centre 6 returns the identification (ID) to the RFID reader system 4. At step s100, the RFID reader system 4 stores the received identification (ID). At step s102, the RFID reader system 4 decrypts the identification and outputs the decrypted inventory information. Returning now to the determining step s90, if the outcome is positive, i.e. "take ownership" is allowed, then the process moves to step s104, where the trusted centre 6 returns the identification (ID), the take ownership key, and the nonce to the RFID reader system 4. At step s106, the RFID reader system 4 acknowledges the take ownership key by sending the nonce to the tag 2. Additionally, at step s108, the RFID reader system 4 decrypts the identification and outputs the decrypted inventory information. At step s110, the tag 2, in response to receiving the nonce from the RFID reader system 4, deletes the old take ownership key, and sends an OK confirmation to the RFID reader system 4. After receiving the OK conformation, the RFID reader system 4 stores the new take ownership key, and optionally changes the read key.

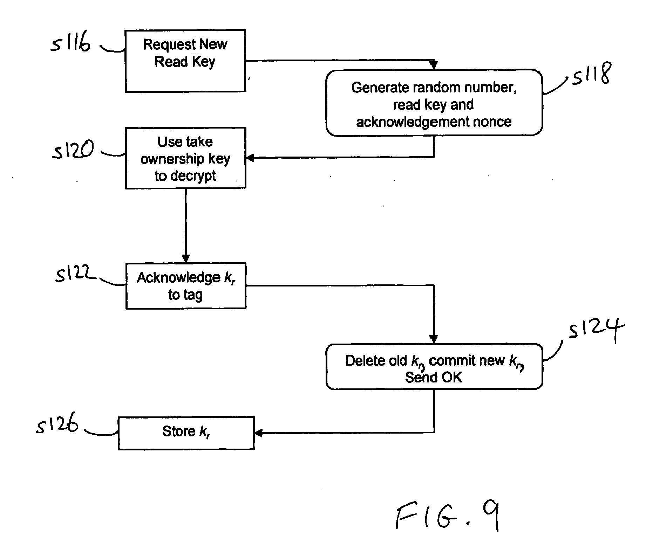

Figure 9 is a process flowchart showing certain process steps carried out in one example of a change read key process that can be used with the above described take ownership protocols and/or for implementing the optional change read key part of step s112 of the process described with reference to Figure 8. In the process of Figure 9, interaction between the tag 2 and the RFID reader system 4 is similar to that in the take ownership process of Figure 8, however the trusted centre 6 is not involved this time. The RFID reader system 4 already has the take ownership key, and in the process of Figure 9 is instructing and enabling the tag 2 to generate a new read key.

At step s116, the RFID reader system 4 requests a new read key from the tag 2. At step s118, the tag 2 generates a random number, a read key and an acknowledgement nonce, and forwards these items to the RFID reader system 4. At step s120, the RFID reader system 4 uses the take ownership key that it already holds to decrypt the received items. At step s122, the RFID reader system 4 acknowledges the read key to the tag 2, i.e. sends an acknowledgement of the read key to the tag 2. At step s124, the tag 2, in response to receiving the acknowledgement, deletes the old read key, commits to the new read key, i.e. makes the new read key the current read key, and sends an OK confirmation to the RFID reader system 4. At step s126, the RFID reader system 4 stores the new read key.

In the above example, the read key $k_r$ is maintained separately from the keys in the tree of secrets $k_i$. $k_r$ is a unique secret for the tag used by the reader back-end, where the leaf key of the series of keys $k_i$ is used by the trusted centre to uniquely identify the tag. This allows the read key $k_r$ to be changed locally by the tag owner without having to inform the trusted centre, which can still identify the tag using the keys $k_i$.

In the above example, the leaf key (or plural keys) of the series of keys $k_i$ serves as an (or plural) identification keys stored by the RFID tag for use by the trusted centre for identifying the RFID tag. In other examples where other protocols are used, other keys may be used as the one or more identification keys for use by the trusted centre for identifying the RFID tag. In other examples, identification may be verified by other means.

It will be appreciated that a layering of capabilities is provided. A first layer or level is reading of the tag by a reader possessing $k_r$; a second layer or level is changing the read key of the tag by a reader possessing $k_t$ (the owner); and a third layer or level is the application to the trusted centre to apply for ownership of the tag.

It should be noted that one or more of the process steps and messages depicted in the Figures and described above may be replaced by other steps achieving the same purpose(s), or where possible such process steps and messages may be performed in differing order to that presented above and shown in the Figures. Furthermore, although all the process steps and messages have, for convenience and ease of understanding, been depicted as discrete temporally-sequential steps, nevertheless some of the process steps and messages may in fact be performed simultaneously or at least overlapping to some extent temporally.

Finally, while embodiments of the invention have been described in relation to radio frequency devices, it will be understood that some of the concepts described may also be applicable to other types of identification devices other than those which make use of radio frequency communication channels.

**Claims**

1.  An RFID device (2), comprising:

a current read key for enabling the RFID device (2) to be read by an RFID reader system (4) holding the current read key;
a current take ownership key; and
means for receiving a take ownership command from the RFID reader system (4).

2. An RFID device (2) according claim 1, further comprising:

means for generating, responsive to receiving the take ownership command, a new take ownership key; and
means for sending the new take ownership key to the RFID reader system (4).

3. An RFID device (2) according to claim 2, further comprising:

means for receiving acknowledgement of the RFID reader system (4) receiving the new take ownership key; and
means for deleting, responsive to receiving the acknowledgement of the RFID reader system (4) receiving the new take ownership key, the current take ownership key and treating the new take ownership key as a new current take ownership key.

4. An RFID device (2) according to claim 3, further comprising:

means for receiving, from the RFID reader system (4), a change read key command and an indication that the RFID reader system (4) holds the new current take ownership key; and
means for replacing, responsive to receiving the change read key command and the indication that the RFID reader system (4) holds the new current take ownership key, the current read key with a new current read key enabling the RFID device (2) to be read by an RFID reader system (4) holding the new current read key.

5. An RFID device (2) according to claim 4, further comprising:

means for generating random numbers;
means for encrypting the random numbers with the relevant take ownership and/or read key;
means for sending the encrypted random number to the RFID reader system (4);
means for receiving the random numbers in responses from the RFID reader system (4); and
means for checking the received random numbers to authenticate that the RFID reader system (4) holds the relevant take ownership key and/or read key.

6. An RFID device (2) according to any of claims 1 to 5, further comprising one or more identification keys for use by an authorisation apparatus for identifying the RFID device (2).

7. A method for an RFID device (2), the method comprising:

storing a current read key enabling the RFID device (2) to be read by an RFID reader system (4) holding the current read key;
storing a current take ownership key; and
receiving a take ownership command from the RFID reader system (4).

8. A method for an RFID device (2) according claim 7, further comprising:

generating, responsive to receiving the take ownership command, a new take ownership key; and
sending the new take ownership key to the RFID reader system (4).

9. A method for an RFID device (2) according to claim 8, further comprising:

receiving acknowledgement of the RFID reader system (4) receiving the new take ownership key; and
deleting, responsive to receiving the acknowledgement of the RFID reader system (4) receiving the new take ownership key, the current take ownership key and treating the new take ownership key as a new current take ownership key.

10. A method for an RFID device (2) according to claim 9, further comprising:

receiving, from the RFID reader system (4), a change read key command and an indication that the RFID reader system (4) holds the new current take ownership key; and

replacing, responsive to receiving the change read key command and the indication that the RFID reader system (4) holds the new current take ownership key, the current read key with a new current read key enabling the RFID device (2) to be read by an RFID reader system (4) holding the new current read key.

11. A method for an RFID device (2) according to claim 10, further comprising:

generating random numbers;

encrypting the random numbers with the relevant take ownership and/or read key;

sending the encrypted random number to the RFID reader system (4);

receiving the random numbers in responses from the RFID reader system (4); and

checking the received random numbers to authenticate that the RFID reader system (4) holds the relevant take ownership key and/or read key.

12. A method for an RFID device (2) according to any of claims 7 to 11, further comprising sending the identity of the RFID device (2) encrypted by one or more identification keys to the RFID reader system (4) for use by an authorisation apparatus for identifying the RFID device (2).

13. A method for an RFID device (2) according to any of claims 7 to 12, further comprising the RFID device (2) successfully responding to being read by an RFID reader system (4) holding the new current read key.

FIG. 1

FIG. 2

EP 2 077 514 A1

s12

Inventory Request

generate r — s14

$r \mid F_{k}(r)_{trunc}$

s16

4

2

FIG.3

FIG. 4

EP 2 077 514 A1

4

2

s46

change read key request

generate $r$, $k_r$  s48

s52  s50  $r \mid F_{k_t}(k_r) \mid F_{k_t}(r \mid n_a)$

store $k_r$ with ID  change read key $\mid n_a$  s54

delete old $k_r$  s56

OK

s58

FIG. 5

FIG. 6

s70 — Inventory Request

Generate random number
Encrypt with read key — s72

s74 — Try to match with read keys in local database

s78 — Inventory

YES

s76 — Read key available?

NO

Try to take ownership — s80

FIG. 7

FIG. 8

EP 2 077 514 A1

s116 — Request New Read Key

s118 — Generate random number, read key and acknowledgement nonce

s120 — Use take ownership key to decrypt

s122 — Acknowledge $k_r$ to tag

s124 — Delete old $k_r$, commit new $k_r$, Send OK

s126 — Store $k_r$

FIG. 9

**European Patent Office**

**EUROPEAN SEARCH REPORT**

Application Number

EP 07 25 5075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FINKENZELLER K: "RFID-Handbuch: Kapitel 8 (Datensicherheit), 10.1 (Transponder mit Speicherfunktion)" RFID HANDBUCH, HANSER VERLAG, MUENCHEN, DE, 31 December 1998 (1998-12-31), pages 133-140,155, XP002394433 | 1,2,7,8 | INV. G06F21/00 G06K19/07 |
| A | * pages 134,163 * | 3-6,9-13 | |
| X | SEPIDEH FOULADGAR, HOSSAM AFIFI: "A Simple Privacy Protecting Scheme Enabling Delegation and Ownership Transfer for RFID Tags" JOURNAL OF COMMUNICATIONS (JCM), [Online] vol. 2, no. 6, 30 November 2007 (2007-11-30), pages 6-13, XP009100969 ISSN: 1796-2021 Retrieved from the Internet: URL:http://www.academypublisher.com/jcm/vo l02/no06/jcm02060613.pdf> [retrieved on 2008-05-26] | 1,7 | |
| A | * page 7, right-hand column * * page 8, right-hand column - page 10, left-hand column * | 2-6,8-13 | TECHNICAL FIELDS SEARCHED (IPC) G06F G06K |
| A | JUELS A: "RFID Security and Privacy: A Research Survey" INTERNET CITATION, [Online] XP002375728 Retrieved from the Internet: URL:http://www.rsasecurity.com/rsalabs/sta ff/bios/ajuels/publications/pdf s/rfid_survey_28_09_05.pdf> [retrieved on 2006-04-03] * pages 11,12 * * pages 14-15 * | 1-13 | G07F H04L G07C |

-/--

The present search report has been drawn up for all claims

| Place of search | Date of completion of the search | Examiner |
|---|---|---|
| Munich | 30 May 2008 | Preuss, Norbert |

EPO FORM 1503 03.82 (P04C01)

European Patent
Office

**EUROPEAN SEARCH REPORT**

Application Number

EP 07 25 5075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 185 307 B1 (JOHNSON JR WILLIAM S [US]) 6 February 2001 (2001-02-06) * figures 5,9A * | 1-13 | |
| A | US 5 841 865 A (SUDIA FRANK WELLS [US]) 24 November 1998 (1998-11-24) * column 15, lines 17-25 * * column 15, lines 50-53 * * column 41, lines 22-28 * * column 42, lines 4-7 * * column 43, lines 20-25 * * column 43, lines 36-47 * | 1-13 | |
| A | EP 1 783 950 A (HUAWEI TECH CO LTD [CN]) 9 May 2007 (2007-05-09) * paragraphs [0013], [0014], [0036] - [0040], [0051] - [0054] * | 1-3,7-9 | |

TECHNICAL FIELDS
SEARCHED      (IPC)

The present search report has been drawn up for all claims

| Place of search | Date of completion of the search | Examiner |
|---|---|---|
| Munich | 30 May 2008 | Preuss, Norbert |

EPO FORM 1503 03.82 (P04C01)

## ANNEX TO THE EUROPEAN SEARCH REPORT
## ON EUROPEAN PATENT APPLICATION NO.

EP 07 25 5075

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2008

| Patent document cited in search report | | Publication date | Patent family member(s) | | Publication date |
|---|---|---|---|---|---|
| US 6185307 | B1 | 06-02-2001 | US | 6078888 A | 20-06-2000 |
| US 5841865 | A | 24-11-1998 | AP | 626 A | 16-01-1998 |
| | | | AT | 202439 T | 15-07-2001 |
| | | | AU | 1680395 A | 01-08-1995 |
| | | | AU | 6084296 A | 10-10-1996 |
| | | | BR | 9506414 A | 09-09-1997 |
| | | | CA | 2176032 A1 | 20-07-1995 |
| | | | CN | 1138927 A | 25-12-1996 |
| | | | CZ | 9601978 A3 | 12-03-1997 |
| | | | DE | 69521413 D1 | 26-07-2001 |
| | | | DE | 69521413 T2 | 29-05-2002 |
| | | | DK | 739560 T3 | 01-10-2001 |
| | | | EP | 0739560 A1 | 30-10-1996 |
| | | | ES | 2158081 T3 | 01-09-2001 |
| | | | GR | 3036650 T3 | 31-12-2001 |
| | | | HU | 75800 A2 | 28-05-1997 |
| | | | JP | 9507729 T | 05-08-1997 |
| | | | JP | 2005328574 A | 24-11-2005 |
| | | | JP | 2006246543 A | 14-09-2006 |
| | | | JP | 2007282295 A | 25-10-2007 |
| | | | NZ | 279622 A | 27-04-1998 |
| | | | NZ | 329891 A | 28-01-2000 |
| | | | OA | 10456 A | 27-03-2002 |
| | | | PL | 315574 A1 | 12-11-1996 |
| | | | PT | 739560 T | 28-12-2001 |
| | | | WO | 9519672 A2 | 20-07-1995 |
| | | | US | 5857022 A | 05-01-1999 |
| | | | US | 6009177 A | 28-12-1999 |
| | | | US | 5872849 A | 16-02-1999 |
| | | | US | 5850451 A | 15-12-1998 |
| | | | US | 5799086 A | 25-08-1998 |
| EP 1783950 | A | 09-05-2007 | WO | 2006079282 A1 | 03-08-2006 |
| | | | CN | 1812611 A | 02-08-2006 |
| | | | US | 2008070549 A1 | 20-03-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVID MOLNA ; ANDREA SOPPERA ; DAVID WAGNER.** A Scalable, Delegatable Pseudonym Protocol - Enabling Ownership Transfer of RFID Tags. *Cryptography,* 11 August 2005, 276-290

- **DAVID MOLNAR ; DAVID WAGNER.** Privacy and Security in Library RFID - Issues, Practices, and Architectures. *Proceedings of the 11th ACM Conference on Computer and Communications Security,* 25 October 2004
- **G. AVOINE ; P. OECHSLIN.** A scalable protocol for RFID pseudonyms. *IEEE PerSec,* 14 March 2004